# EUROPÄISCHE PATENTANMELDUNG

(11) **EP 1 705 657 A2**
(43) Veröffentlichungstag der Anmeldung: **27.09.2006**
(21) Anmeldenummer: 06005705.6
(22) Anmeldetag: 21.03.2006
(51) Int. Cl.: G11B 23/28

(54) **Verfahren zum bezahlten Freischalten und Kopiergeschützter freischaltbarer Datenträger**

(30) Priorität: 22.03.2005 DE 102005013754
(71) Anmelder: OK Media Disc Service GmbH & Co. KG, 24589 Nortorf (DE)
(72) Erfinder: Sellmer, Dirk, 24146 Kiel (DE); Klahn, Stefan, 24568 Kaltenkirchen (DE)
(74) Vertreter: Biehl, Christian

(57) **Zusammenfassung**

Freischaltverfahren für auf DVD-Video-Datenträgern kopiergeschützt aufgezeichnete Datenmengen, mit einem ein auf dem Datenträger vorhandenes Interaktionsmenü zur Abfrage von Schlüsselinformationen, wobei bei Erhalt korrekter Schlüsselinformationen das Menü den Sprung nicht an den Beginn des oder der Datenmenge(n), sondern an einen Punkt hinter der Störstruktur in die Mitte der Gesamt-Datenmengen veranlaßt, wo nach Auffüllen mit willkürlichen Daten die gewünschte freizuschaltende Teil-Datenmenge aufgezeichnet ist.

## Beschreibung

Die Erfindung betrifft Verfahren zum bezahlten Freischalten und einen kopiergeschützten freischaltbarer Datenträger mit den Merkmalen des Oberbegriffs des Hauptanspruches.

Der Erfindung liegt das Bedürfnis zugrunde, bestimmten ausgesuchten Nutzern die entweder eine besondere Berechtigung haben, oder eine solche durch Bezahlung erlangen können, Inhalte von Datenträgern oder Datenmengen zugänglich zu machen.

Das Verfahren widerrechtlichen Kopien urheberrechtlich geschützter Inhalte nimmt insbesondere bei den zur Zeit vertriebenen DVD-Video-Datenträgern immer besorgniserregendere Maße an. Mit Kopierprogrammen wird der digitale Inhalt von DVDs ausgelesen und in einer Vielzahl illegaler Kopien schnell verbreitet. Ziel der Erfindung ist, solche Verbreitungswege durchaus zuzulassen, aber die Nutzung wesentlicher Inhalte von dem Kontrollieren einer Berechtigung eines Nutzers abhängig zu machen.

Während für von einem Computer gelesene Datenträger eine Logikeinheit zur Verfügung steht, in die ein Programm zur Auswertung des Datenträgers eingebracht werden kann, so dass beispielsweise ein Kopierschutz wie er in der EP 0 987 705 B1 (der Anmelderin OK Media Disc Service GmbH & Co. KG) beschrieben ist, zur Anwendung kommen kann, ist für DVD-Abspielgeräte dieses Verfahren nicht einsetzbar, da keine Logikeinheit zur Verfügung steht, in die ein Programm eingeladen werden könnte. Das Verfahren der EP 1 536 520 A1 (der Anmelderin OK Media Disc Service GmbH & Co. KG) gibt keine Hinweise, wie eine bezahlte oder anderweitig erworbene Berechtigung eines Nutzers geprüft oder auf eine manipulationssichere Weise ausgewertet werden kann.

Weiter muß vorausgeschickt werden, daß die großen Datenmengen, wie sie u.a. auf DVDs vorhanden sind, als ,stream' von Vektorinformationen und nicht etwa Bildpixeln vorhanden sind, und diese Datenmengen erst von einem darauf spezialisierten Prozessor eines DVD-Abspielgerätes in jeweils anzuzeigende Bilder, Zwischenbilder und Ton zusammengesetzt werden.

Es ist nun Aufgabe der Erfindung, ein Verfahren zu schaffen, mit dem Inhalte auf einer DVD oder einer auf anderem Wege vervielfältigten Datenmenge freigeschaltet werden können, nachdem bestimmte Bedingungen, z.B. der kostenpflichtige Erhalt eines Codes und anschließende Eingabe dieses in ein Steuergerät erfüllt wurden.

Erfindungsgemäß wird dies durch ein Verfahren mit den Merkmalen des Anspruches 1 und einen mit dem Verfahren hergestellten Datenträger gelöst, bei dem zusätzliche Sprungbefehlsdaten für ein die Daten interpretierendes Wiedergabegerät, kurz "DVD-Wiedergabegerät", und nachfolgende bei der Wiedergabe zu überspringende Datenbereiche beliebiger Länge zu den auf dem Datenträger üblicherweise aufzubringenden Daten an wenigstens einem Ort innerhalb des später wiederzugebenden Datenmaterials hinzugefügt werden.

Sprungbefehle, die beispielsweise dazu benutzt werden, von bestimmten Orten des Menüs an bestimmte Kapitel auf einer DVD zu springen, kann ein DVD-Wiedergabegerät ausführen, diese werden jedoch bei einem Bit-zu-Bit Erstellen einer Kopie selbstverständlich nicht interpretiert, sondern es würde versucht werden, sie schlicht zu lesen und später identisch zu kopieren.

Wenn nun der Original-Datenträger unter Änderung der physikalischen Integrität innerhalb der beliebigen Daten vorbestimmter Länge hinter diesen Sprungbefehlen geändert wird, werden Lesefehler bei Kopieren provoziert, die zum Ergebnis haben, dass z.B. spätestens an dieser Stelle kein Videodatenstrom mehr vorliegt und ein etwaiges Kopierprogramm keine lesefähigen Daten mehr produzieren kann.

Da üblicherweise eine Videosequenz auf DVDs in einem 1 Gigabyte großen "video object file" (VOB) abgespeichert ist, d. h. in vier bis fünf Einheiten auf einer sog. DVD 5 vorliegt (oder auch fünf bis neun Einheiten auf einer sogenannten DVD 9), deren Anfang und Ende leicht aufgefunden werden können, wird vorgeschlagen, in jeder VOB derart beschädigend veränderte Daten einzufügen. Insbesondere am Anfang/Ende der ersten VOB und am Ende der letzten VOB, und beispielsweise vor dem "Showdown" eines Films.

Nun stellt sich bei DVDs das weitere Problem, dass das Menü erlaubt, kapitelweise (zum Beispiel in zwanzig verschiedenen Kapiteln) die DVD anzusehen. Bei Video-DVDs, auf denen Musikvorführungen ist, werden beispielsweise einzelne Musiktitel so angesprungen. Um nun das Menü selbst unzugänglich zu gestalten, wird vorgeschlagen, einem sogenannten FP (first play) - Bereich, dem Bereich, der bei einer DVD zuerst ausgelesen wird und an dem die Speicherposition der Daten für die Wiedergabe des Menüs, auf dem Datenträger vorhanden sind, derart zu verändern, dass nicht zu den Daten des Menüs, sondern zu einem anderen Speicherbereich gesprungen wird, an dem ein Vorschalt-Menü mit Steuerbefehlen für ein DVD-Wiedergabegerät abgelegt ist.

Hier können in verschlüsselter Weise bestimmte Bit-Folgen, die für jede DVD oder für jeden DVD-Titel anders gewählt sein können, als Sprungbefehle definiert werden. Auf diese Weise lässt sich erreichen, dass Kopierprogramme nicht einfach bestimmte Bitfolgen als Sprungbefehle ausmachen, oder eben Kopierprogrammen "beigebracht" wird, nach definierten Sprungbefehlen zu suchen. Im übrigen würde ein solcher Sprungbefehl, wenn er an eine absolute und keine relative Adresse auf dem Datenträger gerichtet ist, wegen anderer Dimensionierung eines kopierten Datenträgers an einen logisch anderen Ort in der Datenmenge zeigen.

Das originale Menü sollte zudem ebenfalls durch Einfügen von Sprungbefehls-Bitfolgen und nachfolgenden z.B. beschädigt veränderten, beliebigen Daten vor einem einfachen Kopieren geschützt sein. Ansonsten könnte versucht werden, unter Verwerfung des Vormenüs auf der DVD das Originalmenü zu suchen und dieses zum Auslesen des DVD-Inhalts zu nutzen.

Schließlich wird noch vorgeschlagen, durch geeignet in die Daten des Menüs eingefügte Befehlsfolgen ein Wiedergabegerät dazu zu veranlassen, zu prüfen, ob es mit den Werten der begrenzten Zahl von ihm bisher erfaßter und gespeicherter Variablen vereinbar ist, dass bereits das Vor-Menü durchlaufen wurde, so dass das DVD-Wiedergabegerät dazu in der Lage ist, zu bestimmen, ob es eine Original-DVD liest oder eine Kopie, bei der das Vor-Menü auf eine irgendwie geartete Art übersprungen wurde. Diese Befehlsfolgen könnten wieder verschlüsselt vorgesehen sein.

Neben dem Verfahren zum Erzeugen eines gegen Kopieren geschützten Datenträgers, bei dem insbesondere die zunächst auf eine Matrize aufgebrachte Information durch die oben genannten zusätzlichen Informationen verändert wird und dann eine Vielzahl von gleichen Datenträgern mit dem Verfahren erzeugt wird, ist Gegenstand der unabhängigen Ansprüche 6 - 10 auch ein kopiergeschützter Datenträger, auf dem sich die genannten hinzugefügten Befehlssequenzen insbesondere für ein DVD-Wiedergabegerät befinden.

Schließlich erlaubt die Erfindung auch ein Verfahren zur Erzeugung eines das unerlaubte Kopieren und Manipulieren an den Sprungbefehlen anzeigenden Datenträgers für den Fall, dass es spezielle Wiedergabegeräte gibt oder Computer derart konfiguriert werden, dass sie die Sprungbefehle nicht oder nach vorheriger Bestätigung durch einen Benutzer ausführen. Datenträger im Sinne der Erfindung ist jedes zum Speichern von Streaminformationen vorgesehene laserabgetastetes Medium, also Blue-ray oder HD-DVD oder ähnliches.

Für diesen Fall können die Sprungbefehlsdaten wie oben beschrieben eingefügt werden und ihnen nachfolgend das Kopieren anzeigende Daten, beispielsweise ein Bild "*Dies ist eine unerlaubte Kopie",* gegebenenfalls noch gefolgt von Informationen, die über das Erstellen der Kopie vorliegen, angezeigt werden.

Nach Anzeige eines derartigen Bildes könnten durch auf der DVD bereits vorhandene Daten anderer Befehlsarten Maßnahmen getroffen sein, die das Wiedergeben wenigstens wesentlicher Teile der übrigen Daten verhindern. Beispielsweise könnte der Ton auf Null geschaltet werden oder durch andersartige als durch Sprungbefehle ein Abbruch der Wiedergabe erzielt werden.

Für die Änderung der physikalischen Struktur auf den hinzugefügten von DVD-Wiedergabegeräten, die die gelesenen Daten sogleich interpretieren und auf Sprungbefehle durchsuchen, die angefahrenen Datenbereiche wird vorgeschlagen, die physikalische Struktur in den hinzugefügten zu überspringenden Datenstrom dadurch zu ändern, dass entweder der track pitch", der Abstand der Spuren, so eng gemacht wird, dass es zu Lesefehlern kommt, dass die "scanning velocity" aus den normierten Vorgaben herausführt, dass der Fokus bei der Herstellung des " Masters" geändert wird, die Intensität oder andere Datenfehler eingefügt werden. Hier gibt es eine Vielzahl von Möglichkeiten, die denkbar sind.

Gemein ist den Verfahren aber das Hinzufügen von Sprungbefehlsdaten, die von einem die Daten interpretierenden Wiedergabegerät als Befehl zum Überspringen eines nachfolgenden Bereichs interpretiert werden, und die Einbringung einer Störstruktur in dem von dem Wiedergabegerät zu überspringenden, aber von einem Daten nur lesenden, nicht also interpretierenden Lesegerät gelesenen Bereich, die eine Unterbrechung des Lesevorgangs bewirkt.

Das Freischalten von Inhalten (Film bzw. Filmtitel) auf einer DVD (Digital Versatile Disc) durch einen Freischaltcode wird im Folgenden anhand eines Beispiels erläutert:

Erreicht werden soll ein Verfahren, dass Inhalte auf einer DVD erst nach Eingeben eines Freischaltcodes, der z.B. kostenpflichtig erhältlich ist (z.B. über einen kostenpflichteigen Telekommunikationsmehrwertdienst dem Nutzer zugänglich sind). Die Freigabe der Inhalte wird über das Menü-System der DVD realisiert. Nach Eingabe des richtigen Codes wird der Zugang in der Menüführung freigegeben.

Problematisch ist das Sperren der Inhalte auf einem PC/MAC, weil hier der Nutzer direkt auf die VOBs (Video Object) zugreifen kann. man kann also ohne Hilfe eines Menüs auch z.B. mit einer Fernbedienung einen PG, einen Anfang eines VOB anspringen.

Deshalb macht dieses Verfahren nur in Verbindung mit einem Kopierschutz (deutsches Patent 103 55 404.1 bzw. europäischen Anmeldung 1 536 420 A1) Sinn, in dem die einzelnen VOBs gegen direktes Abspielen geschützt sind. Die VOBs erhalten hier am Anfang einen nicht abspielbaren Teil, beim Lesen vom Anfang des VOBs bleibt der DVD-Player an dieser Stelle hängen bzw. stoppt das Auslesen. Bei der Freigabe durch das Menü wird einem DVD-Player nach ggf. Definition der Sprungsbefehle zunächst ein Sprung an den PG1, den Beginn eines VOB als Anweisung auf die DVD programmiert und dann durch die Programmierung im authoring der DVD weiter ein Sprung zur nächsten Zelle (Cell 2).

Kopierte Datenträger werden hier keine sinnvollen Daten aufweisen, da durch den unmittelbar vorherigen fehlerhaften Bereich, kein Kopieren zustandekommt.

Technisch neu hierbei ist die genaue Position im VOB des nichtkopierbaren bzw. nichtlesbaren Fingerprints, der Störstruktur. Der erste Sprungbefehl führt immer an den Anfang des VOBs. Hier befindet sich PG1, der Einstartpunkt eines sog. ,Video Title Set' welchem man dann den entsprechenden Sprungbefehl zur Cell 2 gibt. Dieser Sprungbefehl kann bedingt ausgeführt werden.

Wird der Fingerprint zu weit weg von PG1 gelegt, so bleibt dem PC-User genügend Zeit, um über einen Fast-Forward-Befehl die Lücke zu überspringen und so in den geschützten Bereich zu gelangen. Wird die Lücke zu dicht an den PG1 gesetzt, kann der DVD-Player beim Positionieren in die Lücke gelangen, was zu einem nicht gewünschten Abbruch führt. Die Position der Lücke ist daher geeignet 25 bis 350 Sektoren nach den letzten abzuspielenden Sektoren des Einsprungbereichen zu positionieren.

Beim Einlegen einer DVD wird dann der Vorspann eines Films gezeigt, der nach einer bestimmten Zeit in ein Menü übergeht, indem der Nutzer dann die Wahl hat, über einen kostenpflichtigen Code den Film weiter anzuschauen oder den Vorgang abzubrechen.

Der Nutzer kann sich den Freischaltcode notieren und so beliebig oft auf den erworbenen Inhalt zugreifen.

## Patentansprüche

1. Verfahren zum bezahlten Freischalten kopiergeschützt auf einem Datenträger aufgezeichneter Datenmengen mit einem Erwerben von Schlüsselinformationen gegen Bezahlung,
wobei der DVD-Video-Datenträger mit einem ,FP-Bereich' (für engl. first play) versehen ist, und eine Störstruktur in einem von einem Wiedergabegerät nicht benötigten, aber von einem Daten nur lesenden, nicht also interpretierenden Lesegerät gelesenen Bereich, die eine Unterbrechung des Lesevorgangs bewirkt, vorgesehen ist,
wobei Sprungbefehlsdaten hinzugefügt sind, die von einem die Daten interpretierenden Wiedergabegerät als Befehl zum Überspringen eines nachfolgenden Bereichs interpretiert werden, indem in dem ,FP-Bereich' des Datenträgers statt der zur Speicherposition des Menüs auf dem Datenträger führenden Daten Daten vorgegeben werden, die das Auslesen eines anderen Speicherbereichs bewirken,
wobei das Wiedergabegerät programmierende Steuerbefehle in dem angegebenen anderen Speicherbereich abgelegt sind, die datenträgerspezifische Bitfolgen als Sprungbefehle definieren, am Ende des angegebenen anderen Speicherbereichs Daten für ein Bewirken des weiteren Auslesens an dem Speicherort des Menüs vorgesehen wird, und die Störstruktur in einem durch die Steuerbefehle umprogrammierten Wiedergabegerät, durch die datenträgerspezifischen Bitfolgen veranlaßt, übersprungen werden.,
**dadurch gekennzeichnet, daß**
ein auf dem Datenträger abgelegtes beim Auslesen dieses startendes Interaktionsmenüs zur Abfrage von Schlüsselinformationen vorgesehen ist, welches bei Erhalt korrekter Schlüsselinformationen das Menü einen Sprung nicht an den Beginn des oder der Datenmenge(n), sondern an einen Punkt hinter der Störstruktur in die Mitte der Gesamt-Datenmengen veranlaßt, an einen Ort, an dem nach Auffüllen mit willkürlichen Daten die gewünschte freizuschaltende Teil-Datenmenge aufgezeichnet ist.

2. Freischaltverfahren nach Anspruch 1, **dadurch gekennzeichnet, daß** das Interaktionsmenü vor die Freigabe des DVD-Titelmenüs geschaltet ist.

3. Freischaltverfahren nach einem der vorangehenden Ansprüche, **dadurch gekennzeichnet, daß** eine gültige Schlüsselzahl aus einer Menge vieler Schlüsselzahlen vorbestimmt ist.

4. Freischaltverfahren nach Anspruch 3, **dadurch gekennzeichnet, daß** jede Schlüsselzahl nur genau einem Benutzer mitgeteilt wird.

5. Freischaltverfahren nach einem der vorangehenden Ansprüche, **dadurch gekennzeichnet, daß** eine Lücke von 25 bis 350 Sektoren nach PG1 (dem Einstartpunkt eines *Video title sets = Beginn VOB)* vor dem Beginn des Speicherortes der Störstruktur gewählt ist.

6. Freischaltverfahren nach einem der Ansprüche 1 bis 5, **dadurch gekennzeichnet, daß** eine Position von 25 bis 350 Sektoren nach den letzten abzuspielenden Sektoren des Einsprungbereichs für den Speicherort der Störstruktur gewählt ist.

7. Datenträger mit einem das Verfahren nach einem der vorangehenden Ansprüche 1 bis 6 verwirklichenden ausführbaren Programm, **dadurch gekennzeichnet, daß** der Datenträger ein zum Speichern von Streaminformationen vorgesehenes laserabgetastetes Medium ist.
